Europäisches Patentamt

European Patent Office

Office européen des brevets

(19)

(11) Publication number: **0 268 333**
**A2**

# (12) EUROPEAN PATENT APPLICATION

(21) Application number: **87202194.4**

(51) Int. Cl.4: **H04M 17/02**

(22) Date of filing: **11.11.87**

(30) Priority: **19.11.86 BE 2061089**

(43) Date of publication of application:
**25.05.88 Bulletin 88/21**

(84) Designated Contracting States:
**CH DE GB LI**

(71) Applicant: **Alcatel N.V.**
**Strawinskylaan 537 (World Trade Center)**
**NL-1077 XX Amsterdam(NL)**

(84) **CH DE GB LI**

(72) Inventor: **Spoormans, Robertus Josepha Elisa**
**Schotensteenweg 180**
**B-2150 Brecht(BE)**
Inventor: **Musschoot, Raoul Christiaan**
**Papegaaistraat 15**
**B-8780 Oostrozebeke(BE)**

(74) Representative: **Vermeersch, Robert et al**
**BELL TELEPHONE MANUFACTURING**
**COMPANY Naamloze Vennootschap Patent**
**Department Francis Wellesplein 1**
**B-2018 Antwerp(BE)**

(54) **Coin controlled system.**

(57) The present coin controlled system is used in a telephone apparatus and includes a removable cash box in the cover (2) of which are mounted a cash box identity indicating circuit (SEL) and a coin detection oscillator (CL, NM2, PM) which are able to be connected to an output oscillator (R3, C2, C3, T1, T2). This oscillator is fed via a receive circuit (CR1, CR3, R2, C1, d1, C4) from a computer (MC, IC) which is mounted in the casing of the apparatus and which includes a transmitter/receiver circuit able to cooperate with the cash box receiver circuit and output oscillator.

EP 0 268 333 A2

FIG.5

## COIN CONTROLLED SYSTEM

The present invention relates to a coin controlled system including control means, a removable cash box and cash box circuitry with means to signal to said control means the presence of the cash box.

Such a coin controlled system is already known from the article "Universal Coin Box Family" by E. Heirbaut et al. published in Electrical Communication, Vol. 54, No 1, 1979, pp. 70-74. In this article no details are given about the cash box presence signalling means, but these could for instance be constituted by a microswitch which is operated when the cash box is present in the system. A drawback of this solution is that by short-circuiting the microswitch the presence of a cash box is simulated so that a fraudulent cashing operation can then easily be performed.

An object of the present invention is to provide a coin controlled system of the above type, but of which the cash box presence signalling means prevent or considerably reduce the possibility of performing a fraudulent cashing operation.

According to the invention this object is achieved due to the fact that said cash box presence signalling means include a receiver/transmitter circuit integral with said cash box, whilst said control means include a receiver/transmitter circuit cooperating with said cash box receiver/transmitter circuit.

Consequently, the presence of a cash box may be detected by the control means by the exchange of signals between the receiver/transmitter circuit thereof and the receiver/transmitter circuit which is integral with the cash box. A fraudulent cashing operation is then practically impossible because this would for instance necessitate the substitution of another transmitter circuit for the one integral with the cash box.

Another characteristic feature of the present coin controlled system is that said control means transmitter circuit is above to reset and operate said cash box transmitter circuit via said cash box receiver circuit.

In this way the fraudulent substitution of another transmitter circuit for the one integral with the cash box can be easily detected since during the time interval separating the reset and operation of the cash box transmitter circuit no signals should be received by the control means.

It should be noted that Belgian patent No 606073 (H. Adelaar 43-5-3) discloses a telecommunication subscriber station which includes a receiver/transmitter circuit cooperating with a receiver/transmitter circuit of the exchange, to which the subscriber station is connected, in order to check the operation of the subscriber station transmitter circuit. However, this patent does not concern a coin controlled system and the cooperation between the receiver/transmitter circuits is not used to prevent fraudulent operations from being performed.

Another characteristic feature of the present system is that said cash box circuitry includes a cash box identity indicating circuit which is coupled to said cash box transmitter circuit able to transmit said cash box identity to said control means.

Still another characteristic feature of the present system is that said cash box circuitry includes a coin detection circuit which is coupled to said cash box transmitter circuit above to communicate the detection of a coin to said control means.

Thus the cash box transmitter circuit is used to signal to the control means not only the cash box presence, but also the cash box identity and a detected coin.

The invention also relates to an oscillator including a capacitance charging and discharging circuit, which is characterized in that said circuit comprises the series connection between first and second terminals of a first resistance and a first capacitance which is shunted by switching means controlled from the first junction point of said first resistance and said first capacitance and from a third terminal, that a supply voltage is connected via a second resistance to said third terminal which is connected to said second terminal via the series connection of a third resistance (R2) and a second capacitance, and that the junction point of said third resistance and second capacitance is connected to said third terminal via the series connection of a diode and a third capacitance, said diode and third capacitance having a junction point which constitutes said first terminal.

The invention also relates to a voltage doubler circuit which is characterized in that it includes the series connection between the poles of a DC source of a first resistance, a second resistance and a first capacitance, the junction point of said second resistance and said first capacitance constituting a circuit output which is connected to the junction point (A) of said first and second resistances via the series connection of a diode and a second capacitance.

The above mentioned and other objects and features of the invention will become more apparent and the invention itself will be best understood by referring to the following description of an embodiment taken in conjunction with the accompanying drawings wherein :

Fig.1 represents part of a coin controlled system according to the invention;

Fig. 2 shows the cover of a cash box which also forms part of the system according to the invention, the part of the system shown in Fig. 1 being mounted in this cover;

Fig. 3 represents coin detection coil CL of Fig. 2 in more detail;

Fig. 4 is a cross-section of Fig. 3 along line IV-IV;

Fig. 5 represents the cash box verification unit CBU of Fig. 2 in detail;

Fig. 6 shows waveforms appearing at various terminals of the system.

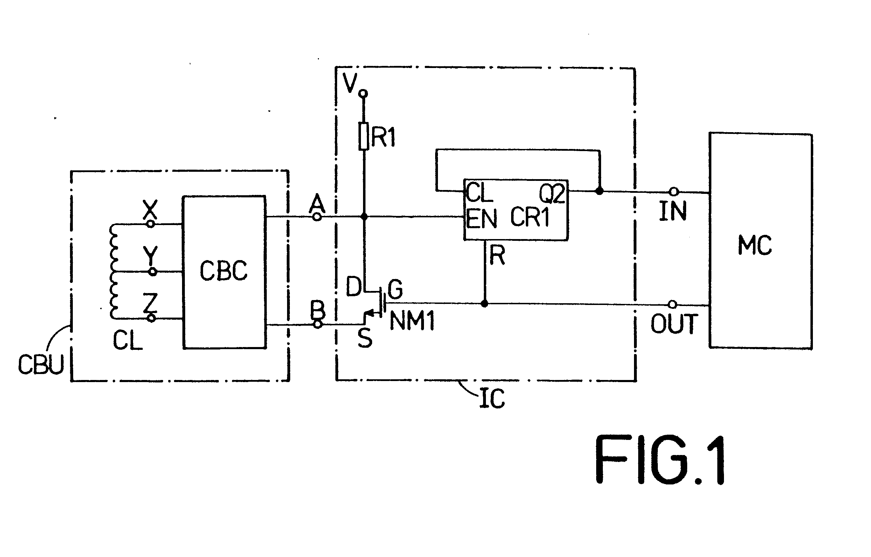

The coin controlled system shown in Fig. 1 is for instance used in a coin controlled telephone apparatus of the type described in the published European patent application 81201260.7. This apparatus comprises a casing and a coin cassette or cash box to collect inserted coins and the present system is able to perform the identification of the cash box, to detect its presence and to detect if a coin is effectively cashed in the cash box and if the cash box is full.

The system operates between a voltage V of 5 Volts and ground and comprises a cash box verification unit CBU and a microcomputer MC which are interconnected by an interface circuit IC. MC and IC are mounted adjacent each other and V is the supply voltage which is derived in te apparatus from power received from the exchange to which this apparatus is connected. CBU is mounted in the cover of the above mentioned cash box (not shown), whilst MC and IC are mounted in the above mentioned casing (not shown) of the apparatus. The computer MC is for instance a COSMAC microprocessor manufactured by RCA. The unit CBU comprises a coin detection coil CL whose terminals X, Y, Z are connected to a cash box verification circuit CBC having terminals A and B, terminal B being grounded. The computer MC has an input terminal IN and an output terminal OUT and the interface circuit IC includes a counter CR1, an NMOS transistor NM1 and a resistor R1. The counter CR1 is for instance of the type CD 4520 B manufactured by RCA and has a clock input CL, an enable input EN, a reset input R and an output Q2. It is incremented by a rising voltage edge applied to its clock input CL when simultaneously its enable input EN and its reset input R are activated and deactivated respectively, and also by a decreasing voltage edge applied to its enable input EN when simultaneously both its other inputs CL and R are deactivated. The computer output terminal OUT is connected to the reset input R of CR1 as well as to the gate electrode of NM1 whose drain-to-source path is connected across terminals A and B of CBC: Voltage supply terminal V is connected to terminal A via resistor R1 and the latter terminal A is also connected to the enable input EN of CR1 whose output Q2 is connected to the input IN of MC as well as to its clock input CL. By this feedback connection the counter CR1 remains in the position attained when it has counted the value 2 and until its reset input R is activated.

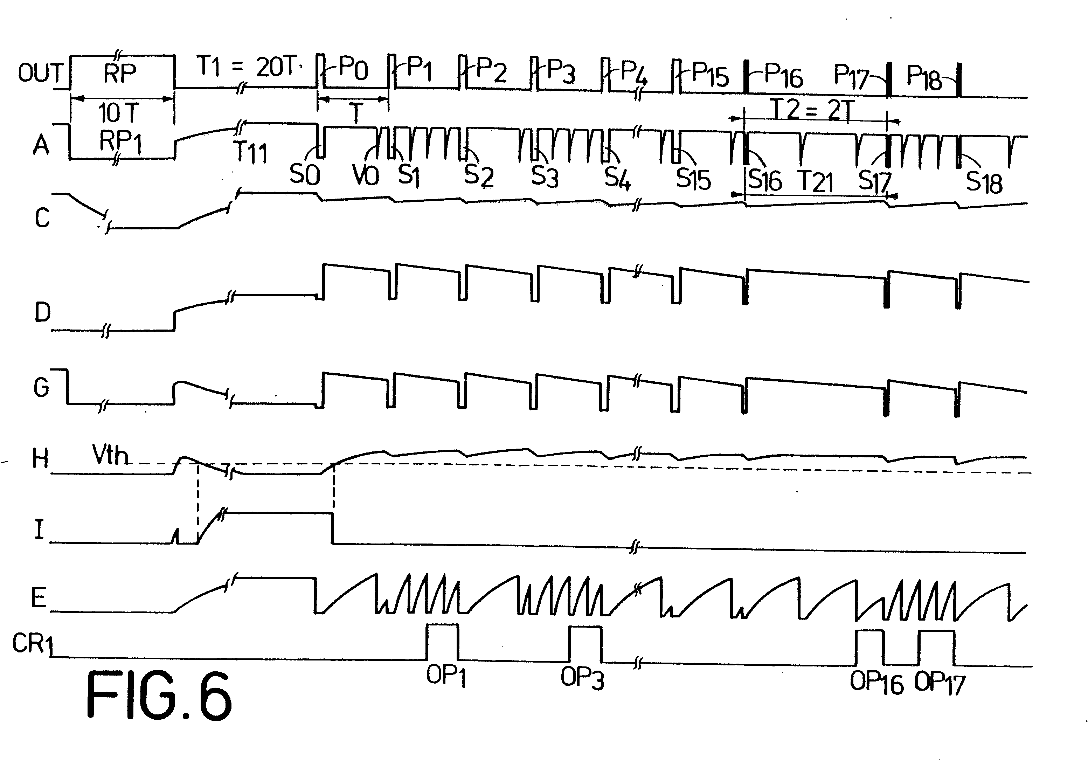

As will be explained later the computer MC is able to transfer pulses to the unit CBU through transistor NM1 which acts as a transmitter, and to receive pulses from CBU on its input IN via counter CR1 which has the function of a receiver. Examples of such pulses are OUT and CR1 shown in Fig. 6.

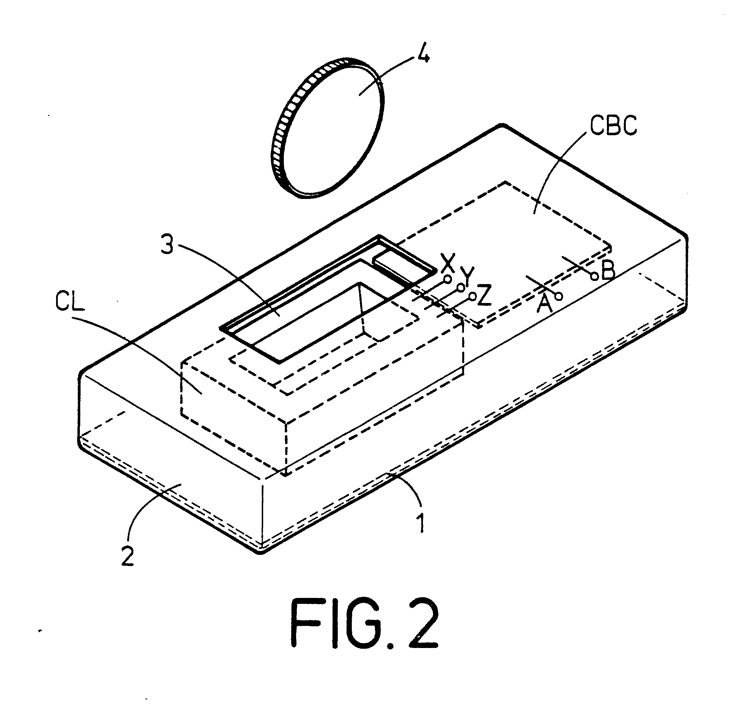

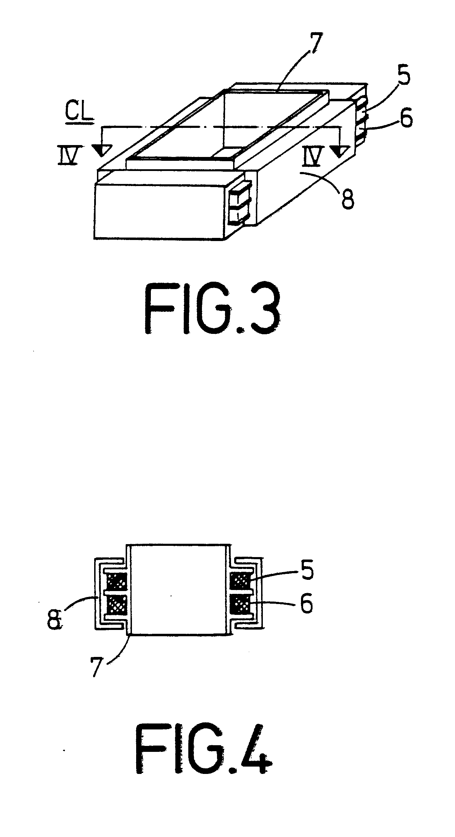

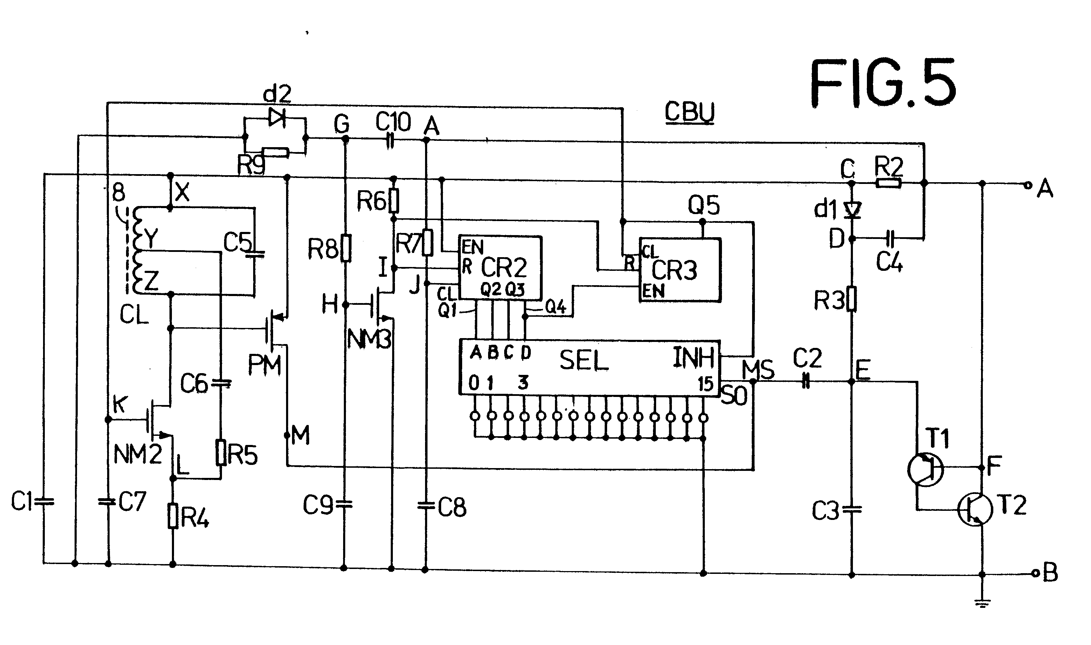

As shown in a schematic way in Fig. 2, the cash box verification circuit CBC is realised on a printed circuit board which is mounted adjacent coil CL on the bottom plate 1 of the hollow cover 2 of the cash box (not shown) of a coin operated telephone apparatus. The top wall of this cover 2 is provided with a slot 3 for coins such as 4. This slot 3 is surrounded inside the cover 2 by the coin detection coil CL which, as shown in Figs 3 and 4, comprises windings 5 and 6 wound on a coil former 7 which is enclosed by a core 8. This coil former 7 is made of an electrically insulating material so that a coin 4 which is inserted in the slot 3 cannot make an unwanted electric contact with CBU comprising CL and CBC.

The coin verification unit CBU is represented in detail on Fig. 5 and includes the above mentioned coil CL, counters CR2 and CR3, a selector circuit SEL, NMOS transistors NM2 and NM3, PMOS transistor PM, PNP transistor T1, NPN transistor T2, resistors R2 to R9, capacitors C1 to C10 and diodes d1 and d2.

Preferred values of these resistors and capacitors are as follows:

| | | | | | | |
|---|---|---|---|---|---|---|
| C1 | = | 1 micro-Farad | R1, R2 | = | 10 kOhms |
| C2 | = | 680 pico-Farad | R3 | = | 10 MOhms |
| C3 | = | 220 pico-Farad | R4 | = | 75 kOhms |
| C4, C7 | = | 10 nano-Farad | R5 | = | 33 kOhms |
| C5 | = | 100 pico-Farad | R6 to R9 | = | 1 MOhm |
| C6, C9 | = | 4 nano-Farad | | | |
| C8 | = | 220 pico-Farad | | | |
| C10 | = | 47 nano-Farad | | | |

The unit CBU functionally includes the following circuits :

-a counter CR2, CR3 which acts as a receiver for pulses received from the microcomputer MC;

-a coin detection oscillator CL, C5, NM2, C7, R4, C5, R5, PM with terminals K, L, M. It is operated by the counter CR2, CR3 and then provides an output waveform indicating the presence or absence of a coin in the slot 3;

- a selector circuit SEL with inputs 0-15 defining the identity of the cash box. It is operated by the counter CR2, CR3 and then provides the cash box identity at its output SO;

-an output oscillator circuit R3, C2, C3, T1, T2 with terminals M, E, F. It acts as a transmitter and has a control input MS which is controlled either by the coin detection oscillator or by the selector circuit;

-a power supply circuit V, R1 (in IC), R2, C1, d1, C4 with terminals C and D. It provides a voltage V to the CBU and a voltage generally substantially equal to 2 V to terminal D of the output oscillator;

-a clock pulse discriminator circuit R7, C8 with terminal J. Its function is to prevent pulses generated by the output oscillator from being received by the counter CR2, CR3;

-a reset circuit C10, R9, d2, R8, C9, R8, NM3 with terminals G, H and I. Its function is to ensure the correct transmission of the cash box identity.

The above circuits are described in detail hereinafter.

The power supply circuit includes resistor R2 and capacitor C1 connected in series across terminals A and B, as well as diode D1 and capacitor C4 which are connected between terminal C, at the junction of R2 and C1, and terminal D and between terminals A and D respectively. The supply voltage V and resistor R1 of the interface circuit IC also form part of this power supply circuit.

The selector circuit SEL has 16 code inputs 0-15, 4 counter inputs A, B, C and D, inhibit input INH and signal output SO. This selector circuit SEL is for instance a COS/MOS Analog Multiplexer/Demultiplexer of the type CD 4067 B manufactured by RCA. The inputs 0-15 are each connected (indicated by a black dot) or not connected to ground and constitute a 16-element code which is the identity of the cash box in the cover of which the unit CBU is mounted. As shown in Fig. 5, for instance only the inputs 1 and 3 are not connected to ground. The selector circuit inputs A and D are connected to the outputs Q1 to Q4 of the counter CR2 respectively, whilst its inhibit input INH is connected to output Q5 of the counter CR3. Under the control of the counter CR2 the selector circuit SEL is able to successively connect the inputs 0 to 15 to its signal output SO which is connected to the control input MS of the output oscillator. This output SO has a low impedance if an identity input is grounded, whereas it has a high impedance when an identity input is open. This impedance is also high when the inhibit input INH is activated.

The counter CR2, CR3 comprises the cascaded counters CR2 and CR3 which are each of the same type as counter CR1 and each have a clock input CL, an enable input EN. a reset input R and outputs Q1 to Q4 and Q5 respectively. The clock input CL of CR2 is connected to terminal J of the pulse discriminator circuit R7, C8 so that pulses applied to terminal A are supplied to this clock input CL via R7, C8. The enable inputs EN of CR2 and CR3 are connected to terminal C of the power supply circuit and to output Q4 or CR2 respectively, and the reset inputs R of these counters are both connected to terminal I of the above mentioned reset circuit. Outputs Q1 to Q4 of CR2 are connected to the selector circuit SEL and are used to step this circuit, whilst output Q5 of CR3 is connected to inhibit input INH of SEL to stop the operation of the latter, as well as to the clock input CL of CR3 in order that CR3 should remain in the position attained when output Q5 has been activated. Output Q5 is also connected to input terminal K of the coin detection oscillator to start when it is activated the operation thereof. The clock pulse discriminator R7, C8 is an integrator circuit which is constituted by the resistor R7 and the capacitor C8 connected in series across the terminals A and B. This integrator circuit has output terminal J which is connected to the clock input CL of CR2. The purpose of this clock pulse discriminator circuit is to prevent pulses locally generated in the CBU

4

by the output oscillator to have an influence on the counter CR2, as already mentioned above.

The reset circuit C10. R9. d2. R8. C9 comprises a differentiator circuit and an integrator circuit. The differentiator circuit is constituted by capacitor C10 and resistor R9, shunted by diode d2, which are connected in series between terminals A and B. The output G of this differentiator circuit is connected to terminal B via the integrator circuit which is constituted by the series connection of resistance R8 and capacitor C9. The junction point of R8 and C9 is terminal H which is connected to the gate electrode of NMOS transistor NM3 whose source electrode is connected to terminal B. Terminal C is connected to the drain electrode of NM3 via resistor R6. Terminal I on this drain electrode is connected to the reset inputs R of both the counters CR2 and CR3. The purpose of the reset circuit is to create on terminal I a reset pulse, shown in Fig. 6, to temporarily prevent the operation of the counter CR2, as will be described in detail later.

The above mentioned coin detector oscillator includes a coil CL which is connected in series with the drain-to-source path of NMOS transistor NM2 and resistor R4 between terminals A and B. The gate electrode of NM2 constitutes the input terminal K which is connected, on the one hand to output Q5 of CR3 and on the other hand to terminal B via capacitor C7 which uncouples for AC the CMOS transistor output resistance (not shown) of counter CR3. Coil CL is shunted by capacitor C5, connected between terminals X and Z of this coil, and a tapping point Y of this coil CL is connected to the junction L point of NM2 and R4 via the series connection of capacitor C6 and resistor R5 which determine the loop gain of the oscillator. Terminal Z of coil CL is connected to the gate electrode of PMOS transistor PM whose source electrode is connected to terminal A and whose drain electrode constitutes output terminal M which is connected to control input MS of the above mentioned output oscillator.

When input terminal K is activated, i.e. when output Q5 of counter CR3 is activated, transistor NM2 becomes conductive and the oscillator starts operating due to which a waveform oscillating around V and having a positive and negative amplitude equal to V is generated at terminal Z. As a consequence transistor PM periodically becomes conductive for the time intervals where this waveform decreases below the threshold value of PM and then has a low output resistance. When a coin inserted in the above slot 3 influences the coil CL the output waveform of the oscillator is damped and transistor PM is blocked.

The above mentioned output oscillator includes resistor R3, capacitors C2 and C3 and transistors T1 and T2. Resistor R3 is connected in series with capacitor C3 between supply terminals D and B and the junction point E of R3, C2 and C3 is connected to terminal B via the emitter-to-collector path of transistor T1 and the base-to-emitter path of transistor T2 in series. The base of T1 and the collector of T2 are connected to terminal F which is directly connected to terminal A. Capacitor C2 is connected between control input MS and terminal E.

The output oscillator is operated when this supply voltage D (Fig. 6) is applied to its terminal D. Indeed, capacitor C3 is then gradually charged and when the voltage at terminal E exceeds that in F, or A, by VBE transistors T1 and T2 both became conductive. When this happens terminals A and B are interconnected and the capacitor C3 discharges. This discharge continues until the transistors T1 and T2 become blocked again. The frequency of oscillation thus obtained may be modified by modifying the condition of the control input MS. Indeed, when MS is for instance connected to ground, capacitor C2 is connected in parallel with capacitor C3 so that C2/C3 instead of C3 alone, is then charged from the voltage V. This obviously lowers the oscillator frequency.

As already mentioned above the present system is able to perform the identification of the cash box, to detect its presence, to detect if a coin is effectively cashed in the cash box and to detect if the cash box is full. These functions are described hereinafter.

To perform these functions, the microcomputer MC generates at its output OUT the voltage waveform OUT (Fig. 6) after it has been detected that the micro-telephone of the coin operated telephone apparatus has been hooked-off. This voltage waveform OUT comprises a positively directed reset pulse RP followed by a negatively directed pulse of duration T1 and a series of positively directed pulses P0 to P18. The pulse series P0 to P16 and P17 to P18 each have a period T; P0 to P15 have a duration equal to T/10 whilst P16 to P18 have a duration equal to T/1000. RP and T1 have a duration equal to 10T and 20T respectively. The pulses P16 and P17 are separated by a time interval T2 equal to 2T. In a practical example T is equal to 10 milliseconds.

As the waveform OUT is applied to the gate electrode of transistor NM1 it appears in inverted form at terminal A of the unit CBU. This waveform A therefore includes a negatively directed reset pulse RP1, followed by a positively directed pulse of duration T11 equal to T1 and by a series of negatively directed pulses S0 to S18, the pulses S16 and S17 being separated by a time interval T21 equal to T2. The pulses, such as V0, shown are considered later.

When the waveform A is appled to the above described power supply circuit the waveforms C and D, both shown in Fig. 6, are generated at the respective like named terminals C and D.

The waveform C is generated because the following happens :

-by the reset pulse RP1 buffer capacitor C1 is fully discharged via resistor R2 and transistor NM1, so that the whole unit CBU is brought in its reset condition;

-by the subsequent pulse T11, capacitor C1 is again fully charged to V through resistor R2;

- by the following pulses S0 to S18 the voltage V at terminal C is substantially not affected.

The waveform D is generated as follows : as long as the voltage at terminals A and C is equal to V also the voltage at terminal D is equal to V so that capacitor C4 is not charged. However, when the voltage at terminal A suddenly becomes ground upon the occurrence of a pulse S0/S18, capacitor C4 charges between ground and V because diode d1 is then blocked. When the voltage at terminal A again increases to V at the end of a pulse S0/S18, the voltage at terminal D increases from V to 2 V and then slightly decreases until it again suddenly drops to about V at the occurrence of a following pulse S0/S18. This means that following the time interval T11 the voltage at terminal D is substantially equal to 2 V except during the pulses S0 to S18.

Because the above waveform C at terminal C is applied to the enable input EN of counter CR2 the operation of the latter is enabled prior to the pulses P0 to P18 being applied to its clock input CL. As the first pulse P0 would already step the counter CR2 to its position 1, it would be impossible to read-out the condition of element 0 of the cash box identity 0-15. For this reason, the above described reset circuit activates the reset output R of counter CR2 at least during the occurrence of pulse S0. To this end it generates the waveform I shown in Fig. 6 in the following way : the pulse waveform A is differentiated by the differentiator circuit C10, R9, d2 which provides at its output G the like named voltage waveform G (Fig. 6). In the negative direction this waveform is clamped by the diode d2 so that it cannot decrease below a negative voltage equal to about -0.8 Volts. The differentiated waveform G thus obtained is then integrated in the integrator circuit R8, C9 which provides at its output H the like named waveform H (Fig. 6). This waveform H is applied to the gate electrode of transistor NM3 so that this transistor is blocked when the voltage at H decreases below its threshold voltage. When this happens a positive voltage pulse I (Fig. 6) is generated at the drain electrode of NM3. This pulse overlaps pulse S0 so that the counter CR2 is then prevented from being stepped since this pulse is applied to its clock input CL.

This means that the condition of element 0 of the cash box identity applied to the selector circuit SEL appears at the output SO thereof as long as the counter CR2 has not been stepped to its position 1 by pulse P1. Likewise, the conditions of the elements 1 to 15 of the cash box identity appear at the output SO of SEL after the counter CR2 has been stepped to the position 1 to 15 by the pulses P1 to P15 respectively. The waveform E shown in Fig. 6 is then generated at terminal E in the following way :

Identity element 0

Because for this element 0 the corresponding input 0 of SEL is at ground potential, the output SO or control input MS of the oscillator is at ground potential too so that capacitor C2 is connected in parallel with capacitor C3. As a consequence, in the output oscillator capacitor C2/C3 is relatively slowly charged by the waveform D after the end of pulse P0. This charging operation continues until the voltage at terminal E exceeds that at terminal E or A by VBE. In this case transistors T1 and T2 become conductive, so that terminal A is then grounded, as indicated by pulse V0 in the waveform A, and that capacitor C2/C3 then discharges. Afterwards the charging of capacitor C2/C3 starts again but this operation is stopped at the start of pulse S1. To be noted that because the time interval during which terminals A and B are interconnected via transistor T2 is small when compared with the time constant of the pulse discriminating circuit R7, C8, this voltage change at terminal A has no influence on the counter CR2.

Identity element 1

Because for this element 1 the corresponding input 1 of SEL is open, capacitor C2 is not connected in parallel with capacitor C3. As a consequence in the output oscillator only capacitor C3 is charged by the voltage waveform D after the end of pulse P1. Because this capacitor C3 is smaller than capacitors C2 and C3 in parallel this charging operation is performed more rapidly than in the case of identity element 0. More particularly, between the pulses S1 and S2, capacitor C3 is fully charged and discharged three times in succession so that terminal A is also grounded three times via T2, as shown in the waveform A.

Identity elements 2 and 4 to 15

The operation is analogous as for identity element 0.

Identity element 3

Here the operation is similar to that for identity element 1.

From the above it follows that depending on the condition of a code element of the cash box identity, the output oscillator shortly grounds terminal A either once or three times after the occurrence of the pulses S0 to S15. In the first case counter CR1 in the interface circuit IC is stepped to its position 1 wherein its output Q2 remains deactivated, whereas in the second case counter CR1 after having been brought in the position 2 is blocked in this position due to the output Q2 and the clock input CL or CR1 being interconnected. The pulses generated at the output of CR1 for the identity elements 1 and 3 are indicated by OP1 and OP3 on Fig. 6. This means that the open/ground condition of each of the elements of the identity of the cash box is communicated to the computer MC by a pulse and by no pulse respectively. Obviously the receipt of MC of a pulse also indicates that a cash box is present. However, this also means that when the cash box identity is 0, i.e. when all identity inputs are grounded, no pulses will be received by MC so that one does not know if a cash box is present or not. To deal with this situation and to detect the presence of a cash box independently of the communication of the cash box identity the microcomputer MC generates the pulses P16 and P17, the pulse P17 following pulse P16 after a time interval equal to 2T instead of T. Pulse P16 steps counter CR3 to its first position wherein its output Q5 is activated. As a consequence also the clock input CL of CR3 and the inhibit input INH of SEL are activated, so that CR3 remains in the position attained and that the impedance of the output SO of the selector circuit SEL is high. Also the input terminal K of the coin detection oscillator is activated, so that this oscillator starts operating. As already mentioned above the output terminal M of this oscillator is then alternately connected to terminal C. As a consequence during the time interval 2T between the pulses P16 and P17 capacitor C2/C3 will be fully charged from the energy power circuit two times in succession so that an output pulse OP16 indicating the presence of the cash box is generated and applied to the input IN of the computer MC. MC is thus informed of the presence of a cash box.

When the computer MC is informed by the coin operated telephone apparatus of the fact that a coin will be cashed it checks immediately afterwards if this coin really enters the cash box. This happens in the following way : when a coin enters the cash box the output voltage waveform at terminal Z of the coin detection oscillator is completely damped during the passage of the coin through the oscillator coil CL. As a consequence, transistor PM is then blocked so that the oscillator output M is then disconnected from terminal C. Between the receipt of the pulses such as P17 and P18, capacitor C3 is therefore e.g. fully charged and discharged four times in succession. This gives rise to an output pulse OP17 which is supplied to the computer MC. Obviously, this pulse also indicates the presence of a cash box.

When the cash box is full the oscillator coil CL is continuously influenced by a coin in the coin slot so that the oscillator output waveform remains continously damped. As a consequence each interrogation pulse then generated by the computer MC gives rise in the cash box circuitry to an output pulse which is supplied to this computer MC. A full cash box is thus detected in the computer by the receipt therein of a continous series of pulses.

From the above it follows that the presence of the cash box is indicated in combination with the cash box identity or with a coin presence/absence indication by the output waveform of the output oscillator. It is also possible to use only the latter oscillator to indicate the cash box presence or absence since after the pulse RP and the time interval T1 the waveform A should operate the output oscillator, thus indicating that the cash box is present. Moreover, because the pulse RP resets this oscillator no pulses should be received by the computer MC during the time interval T1. If this is the case this is an indication that another output oscillator has been substituted, in a fraudulent way, for the normal output oscillator.

While the principles of the invention have been described above in connection with specific apparatus, it is to be clearly understood that this description is made only by way of example and not as a limitation on the scope of the invention.

## Claims

1. Coin controlled system including control means (MC, IC), a removable cash box (2) and cash box circuitry (CBU) with means to signal to said control means the presence of the cash box, characterized in that said cash box presence signalling means include a receiver (CR2, CR3, R2, d1, C4) / transmitter (R2, C2, C3, T1, T2) circuit integral with said cash box, whilst said control means (MC/IC) include a receiver (CR1) / transmitter (NM1) circuit cooperating with said cash box receiver/transmitter circuit.

2. Coin controlled system according to claim 1, characterized in that said control means transmitter circuit (NM1) is able to reset and operate said cash box transmitter circuit (R3, C2, C3, T1, T2) via said cash box receiver circuit (CR2, CR3, R2, C1, d1, C4).

3. Coin controlled system according to claim 2, characterized in that said cash box receiver circuit (CR2, CR3, R2, C1, d1, C4) includes an electric power supply circuit (R2, C1, d1, C4) which is able to supply electric power to said cash box circuitry and to said cash box transmitter circuit (R3, C2, C3, T1, T2) thereof, said power supply circuit being controlled by control signals (A) received from said control means transmitter circuit (NM1).

4. Coin controlled system according to claim 3, characterized in that said control means (MC, IC) are coupled to said cash box circuitry via a two-wire line (A, B) and are adapted to transmit said control signals (A) to said cash box circuitry by controlling a switch (NM1) which is coupled across said two-wire line (A, B), one line wire (A) of which is continuously connected to a first supply voltage (V) through a first resistance (R1).

5. Coin controlled system according to claim 4, characterized in that said electric power circuit (R2, C1, d1, C4) includes a first capacitance charging circuit (R2, C1) which is coupled across said two-wire line (A, B) and is able in response to said control signals (A) to provide at a first terminal (C) a second supply voltage (C) to said cash box circuitry, said first capacitance charging circuit including the series connection of a second resistance (R2) and a first capacitance (C1) the junction point of which constitutes said first terminal (C).

6. Coin controlled system according to claim 5, characterized in that said electric power supply circuit (R2, C1, d1, C4) includes a second capacitance charging circuit (R2, d1, C4) which is coupled between said first terminal (C) and said one line wire (A) of said two-wire line (A, B) and which is able to provide at a second terminal (D) a third supply voltage (D) to said cash box transmitter circuit (R3, C2, C3, T1, T2), said second capacitance charging circuit including the series connection of a diode (d1) and a second capacitance (C4) the junction point of which constitutes said second terminal (D).

7. Coin controlled system according to claim 6, characterized in that said cash box transmitter circuit (R3, C2, C3, T1, T2) is constituted by an oscillator comprising a third capacitance charging circuit (R3, C2, C3) which includes the series connected between said second terminal (D) and the other line wire (B) of said two-wire line (A, B) of a third resistance (R3) and a third capacitance (C3), the junction point (E) of said third resistance and said third capacitance as well as said one line wire (A) being both coupled to said other line wire (B) through first switching means (T1, T2).

8. Coin controlled system according to claim 7, characterized in that said first switching means (T1, T2) include a PNP transistor (T1) whose emitter-to-collector path is connected in series with the base-to-emitter path of an NPN transistor (T2) between said second terminal (D) and said other line wire (B), the collector of said NPN transistor and the base of said PNP transistor being directly connected to said one line wire (A).

9. Coin controlled system according to claim 1, characterized in that said cash box circuitry (CBU) includes a cash box identity indicating circuit (SEL), which is coupled to said cash box transmitter circuit (R3, C2, C3, T1, T2) able to transmit said cash box identity to said control means (MC, IC).

10. Coin controlled system according to claim 1, characterized in that said cash box circuitry (CBU) includes a coin detection circuit (CL, NM2, PM) which is coupled to said cash box transmitter circuit (R3, C2, C3, T1, T2) able to communicate the detection of a coin to said control means (MC, IC).

11. Coin controlled system according to claims 9 or 10, characterized in that said cash box transmitter circuit (R3, C2, C3, T1, T2) is constituted by an oscillator whose frequency may be changed by said cash box identity indicating circuit (SEL) or by said coin detection circuit (CL, NM2, PM).

12. Coin controlled system according to claims 7 and 11, characterized in that said oscillator (R3, C2, C3, T1, T2) has third terminal (MX) which is coupled to said junction point (E) of said third resistance (R3) and said third capacitance (C3) via a fourth capacitance (C2), and that an output (SO) of said cash box indicating circuit (SEL) and an output (M) of said coin detection circuit (CL, NM2, PM) are both coupled to said third terminal (MS) of said oscillator (R3, C2, C3, T1, T2).

8

13. Coin controlled system according to claim 12, characterized in that said cash box identity indicating circuit is constituted by a multiplexer circuit (SEL) having a number of inputs (0-15) which define said cash box identity and which may be successively connected to the output (SO) of said cash box identity indicating circuit under the control of counter means (CR2, CR3) forming part of said cash box receiver circuit (CR2, CR3, R2, C1, d1, C4) and operated by said control signals (A).

14. Coin controlled system according to claim 13, characterized in that said counter means (CR2, CR3) after having controlled said cash box identity indicating circuit (SEL) operate said coin detection circuit (CL, NM2, PM).

15. Coin controlled system according to claim 10, characterized in that said coin detection circuit (CL, NM2, PM) comprises a second oscillator including a coil (CL) which is mounted is said cash box around a coin slot (3) thereof on a coil former (7) made of an electrically insulating material and mounted in the prolongation of said coin slot (3).

16. Coin controlled system according to claim 15, characterized in that said second oscillator (CL, NM2, PM) produces on its output (M) a waveform or not depending on a coin not influencing and influencing said coil (CL) respectively.

17. Coin controlled system according to claims 14 and 16, characterized in that in said second oscillator said coil (CL) is coupled in series with second switching means (NM2), controlled from said counter means (CR2, CR3), and a fourth resistance (R4) between said first terminal (C) and said other line wire (B), said coil (CL) being shunted by a fifth capacitance (C5) and a tapping point (Y) thereof being connected to the junction point (L) of said second switching means (NM2) and said fourth resistance (R4) via the series connection of a sixth capacitance (C6) and a fifth resistance (R5) and that the junction point (Z) of said coil (CL) and said second switching means (NM2) controls third switching means (PM) which are connected between said first terminal (C) and the oscillator output (MS).

18. Coin controlled system according to claim 1, characterized in that said cash box circuitry is mounted in a cover (2) of said cash box.

19. Oscillator including a capacitance charging and discharging circuit, characterized in that said circuit comprises the series connection between first (D) and second (B) terminals of a first resistance (R3) and a first capacitance (C3) which is shunted by switching means (T1, T2) controlled from the first junction point (E) of said first resistance (R3) and said first capacitance (C3) and from a third terminal (A), that a supply voltage (V) is connected via a second resistance (R1) to said third terminal (A) which is connected to said second terminal (B) via series connection of a third resistance (R2) and a second capacitance (C1), and that the junction point (C) of said third resistance and second capacitance is connected to said third terminal (A) via the series connection of a diode (d1) and a third capacitance (C4), said diode and third capacitance having a junction point (D) which constitutes said first terminal (D).

20. Oscillator according to claim 19, characterized in that said switching means (T1, T2) include a PNP transistor (T1) and a NPN transistor (T2) the collectors and bases of which are interconnected and the emitter of said PNP transistor, the collector of said NPN transistor and the emitter of said NPN transistor being connected to said first junction point (E) to said third terminal (A) and to said second terminal (B) respectively.

21. Voltage doubler circuit, characterized in that it includes the series connection between the poles of a DC source (V) of a first resistance (R1), a second resistance (R2) and a first capacitance (C1), the junction point (D) of said second resistance (R2) and said first capacitance (C1) constituting a circuit output (D) which is connected to the junction point (A) of said first (R1) and second (R2) resistances via the series connection of a diode (d1) and a second capacitance (C4).

**FIG.1**

**FIG. 2**

# FIG.3

# FIG.4

FIG.5

FIG.6